Europäisches Patentamt

European Patent Office

Office européen des brevets

(19)

(11) **EP 1 251 497 A2**

(12) **EUROPEAN PATENT APPLICATION**

(43) Date of publication:
**23.10.2002 Bulletin 2002/43**

(51) Int Cl.⁷: **G11B 7/00**

(21) Application number: **02252246.0**

(22) Date of filing: **27.03.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **27.03.2001 JP 2001090762**

(71) Applicant: **Mitsumi Electric Co., Ltd.**
**Chofu-shi, Tokyo (JP)**

(72) Inventors:
• **Negoro, Kenichi, Mitsumi Electric Co. Ltd.**
**Atsugi-shi, Kanagawa (JP)**
• **Kan, Kenji, Mitsumi Electric Co. Ltd.**
**Atsugi-shi, Kanagawa (JP)**

(74) Representative: **Moir, Michael Christopher et al**
**Mathys & Squire**
**100 Gray's Inn Road**
**London WC1X 8AL (GB)**

(54) **Thin optical pickup unit, and lens therefor**

(57)    An optical pickup unit for converging a laser beam produced by a semiconductor laser (LD) on a signal recording surface of an optical disc (Disc) through a polarized optical system, and for detecting a return beam from the signal recording surface by a photodetector (PD) through the polarized optical system. The polarized optical system includes a collimator lens (CL (WP)), which comprises a polished lens (GS) having two surfaces, a functional resin layer (RS(WP)) being attached on one of the surfaces of the polished lens. The functional resin layer functions as a wave plate. Such lens may comprise an objective lens.

FIG. 4

EP 1 251 497 A2

**Description**

Background of the Invention:

This invention relates to an optical pickup unit, which is contained in an optical disc drive, for recording/reproducing data in/from an optical recording medium (an optical disc) such as a CD-R (compact disc-recordable), a CD-RW (CD-rewritable), and a DVD (digital versatile disc).

In the manner known in the art, an optical pickup unit is a unit for carrying out recording (writing) or erasing of information by converging a laser beam produced by a semiconductor laser serving as an optical source on a signal recording surface of an optical disc through an objective lens and for carrying out reproducing of information by detecting a return beam from the signal recording surface by a photodetector serving as optical detecting means.

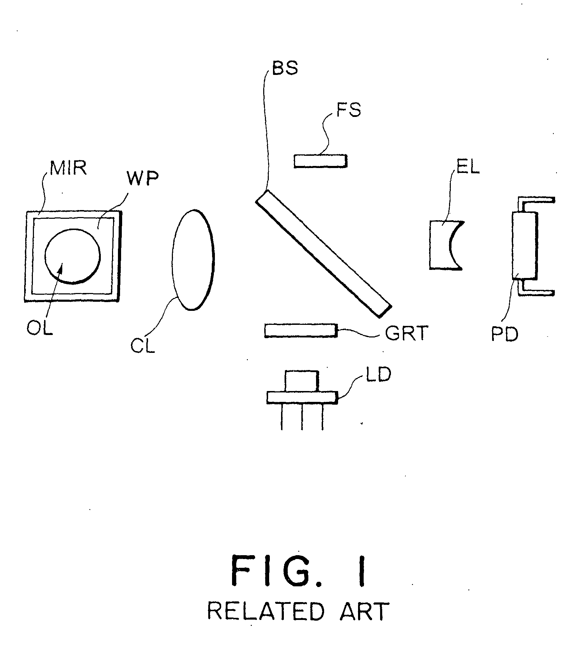

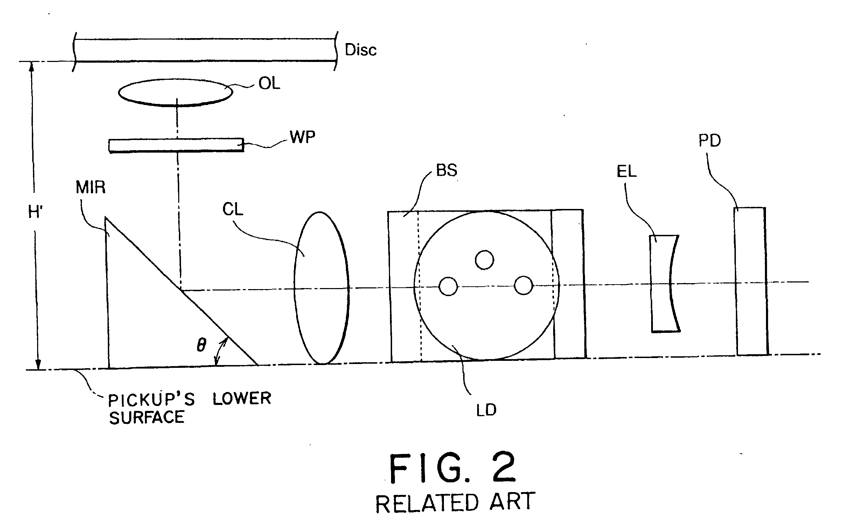

In the manner which will later be described in conjunction with Figs. 1 and 2, an existing optical pickup unit comprises a semiconductor laser (laser diode), a diffraction grating, a beam splitter, a collimator lens, a rising mirror, a wave plate, an objective lens, a concave lens (enlargement lens), a photodetector (light receiving element), and a forward sensor. The optical pickup unit uses, as an optical system, a polarized optical system. The "polarized optical system" means an optical system which is capable of changing a polarization direction of a laser beam.

In the existing optical pickup unit having a structure in which the semiconductor laser and the photodetector are separately arranged with each other and adopting the polarized optical system as the optical system, the wave plate must be disposed between the rising mirror and the objective lens. This results in an increase in the number of parts, and it is therefore difficult to lower the height of the optical pickup unit. Therefore, as a result, it is difficult to make the optical pickup unit thin.

Summary of the Invention:

It is therefore an object of the preferred embodiment of this invention to provide an optical pickup unit which has a reduced number of parts and therefore reduced cost.

It is another object of the preferred embodiment of this invention to provide a thin optical pickup unit.

An optical pickup unit converges a laser beam produced by a semiconductor laser on a signal recording surface of an optical disc through a polarized optical system, and detects a return beam from the signal recording surface by a photodetector through the polarized optical system. According to an aspect of this invention, the above-mentioned polarized optical system includes a functional lens which comprises a polished lens having one surface and a functional resin layer attached on the one surface of the polished lens. The functional resin layer functions as a wave plate.

In the aforementioned optical pickup unit, the functional lens may comprise a collimator lens or an objective lens.

A functional lens comprises a polished lens having one surface and a functional resin layer attached on the one surface of the polished lens. According to an aspect of this invention, the functional resin layer functions as a wave plate.

Brief Description of the Drawings:

Preferred features of the present invention will now be described, by way of example only, with reference to the accompanying drawings, in which:-

Fig. 1 is a plan view showing a polarized optical system of an existing optical pickup unit;
Fig. 2 is a front view showing the polarized optical system of the existing optical pickup unit illustrated in Fig. 1;
Fig. 3 schematically shows a collimator lens for use in the existing optical pickup unit illustrated in Figs. 1 and 2;
Fig. 4 is a plan view showing a polarized optical system of an optical pickup unit according a preferred embodiment of this invention;
Fig. 5 is a front view showing the polarized optical system of the optical pickup unit illustrated in Fig. 4; and
Fig. 6 schematically shows a collimator lens with a wave plate for use in the optical pickup unit illustrated in Figs. 4 and 5.

Description of the Preferred Embodiment:

Referring to Figs. 1 and 2, an existing optical pickup unit will be described at first in order to facilitate an understanding of the present invention. Fig. 1 is a plan view showing a polarized optical system of the existing optical pickup unit while Fig. 2 is a front view showing the polarized optical system of the existing optical pickup unit. The illustrated optical pickup unit uses, as an optical system, a polarized optical system.

The illustrated optical pickup unit comprises a semiconductor laser (laser diode) LD, a diffraction grating GRT, a beam splitter BS, a collimator lens CL, a rising mirror MIR, a wave plate WP, an objective lens OL, a concave lens (enlargement lens) EL, a photodetector (light receiving element) PD, and a forward sensor FS. In addition, a reference symbol "Disc" designates an optical disc.

In the optical pickup unit with such a structure, disposed this side, the semiconductor laser LD radiates a laser beam in the horizontally forward direction. The outgoing laser beam is separated into three laser beams by the diffraction grating GRT and is bent at a right angle by the beam splitter BS to go horizontally leftward. In addition, the beam splitter BS separates the incident laser beam into a reflected beam and a transmitted beam at a constant ratio. For example, the beam splitter BS reflects 80% of the incident laser beam as the reflected beam and transmits 20% of the incident laser beam as the transmitted beam. The forward sensor FS is also called a front monitor and is for monitoring a light amount of the transmitted beam from the beam splitter BS. The laser beam, which goes horizontally leftward, is collimated into a collimated beam by the collimator lens CL and thereafter is bent at a right angle by reflection at a reflecting surface of the rising mirror MIR to go vertically upward. The laser beam, which goes vertically upward, has a polarization direction changed by the wave plate WP and is converged (irradiated) on a signal recording surface of the optical disc Disc through the objective lens OL.

The wave plate WP may be a half-wave plate or a quarter-wave plate. Such a wave plate WP comprises a transparent plate made of, as a material, a birefringent crystal, such as a quartz crystal. It is known to use, as the wave plate WP, a functional resin or a high-performance resin which is sandwiched between a pair of glass plates.

Reflected by the signal recording surface of the optical disc Disc, a reflected beam (return beam) goes vertically downward, passes through the objective lens OL, has a polarization direction changed by the wave plate WP, and is bent at a right angle by reflecting at the reflecting surface of the rising mirror MIR to go horizontally rightward. The laser beam, which goes horizontally rightward, is detected by the photodetector PD through the collimator lens CL, the beam splitter BS, and the concave lens EL.

In addition, in the manner as apparent from Fig. 2, the semiconductor laser LD, the beam splitter BS, the collimator lens CL, the rising mirror MIR, and the photodetector PD are disposed above a lower surface of the optical pickup unit (which will be called a pickup's lower surface). In addition, optical parts such as the semiconductor laser LD, the diffraction grating GRT, the beam splitter BS, the collimator lens CL, the rising mirror MIR, the concave lens EL, the photodetector PD, the wave plate WP, and the forward sensor FS are held in an optical base (not shown). Furthermore, the objective lens OL is held by a lens holder (not shown) which is supported to the optical base so as to be slightly movable. The pickup's lower surface is a lower surface of the optical base. At any rate, in the existing optical pickup unit, the rising mirror MIR is disposed so that the reflecting surface of the rising mirror MIR is inclined to the pickup's lower surface by 45 degrees. In other words, a rising or included angle θ between the reflecting surface of the rising mirror MIR and the pickup's lower surface is equal to 45 degrees.

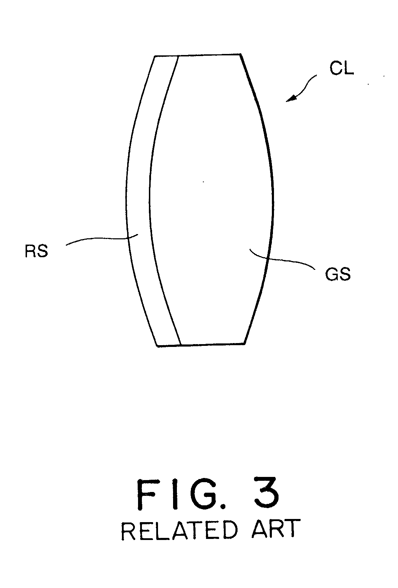

As shown in Fig. 3, the collimator lens CL may comprise a glass (a polished lens) GS having one surface and a resin layer RS formed or attached on the one surface of the polished lens GS. The reason is as follows. Specifically, the collimator lens comprising the polished lens GS alone has a large amount of spherical aberration as it is, and does not suit use as the optical pickup unit. For this purpose, in order to collect such spherical aberration, as the collimator lens CL, as illustrated in Fig. 3, a functional lens called a "hybrid lens" is used which comprises the polished lens GS having the one surface on which an aspheric surface made of the resin layer RS is formed. One example of such a "hybrid lens" in which the resin layer has a function as a spectral filter is disclosed in Japanese Unexamined Patent Publication Tokkai No. Hei 7-56006 or JP-A 7-56006.

In order to adopt the polarized optical system, the existing optical pickup unit uses a glass wave plate WP made of the quartz crystal disposed between the rising mirror MIR and the objective lens OL as described above.

The optical pickup unit with such a structure is moved in a predetermined disc radial direction for the optical disc Disc by a pickup driving portion (not shown). That is, the optical pickup unit is slidably supported on a chassis (not shown) of an optical disc drive. An upper surface of the chassis and the pickup's lower surface are arranged with only a little space left therebetween. Accordingly, it is not preferable that the above-mentioned optical parts are projected downwards below the pickup's lower surface (the lower surface of the optical base). In addition, it is possible to use generally commercially available general-purpose optical parts as the above-mentioned optical parts.

In recent years, advances have made the optical disc drive thin. Accompanying this, it is necessary for the optical pickup unit to be made thin. Throughout the specification, "height measure" means a measurement H' between the lower surface of the optical base and a lower surace of the optical disc Disc.

In order to make the optical pickup unit thin, a light-emitting/receiving unit integrally comprising a semiconductor laser, a photodetector, a diffraction grating, and a hologram element is best used.

In addition, means for further making the optical pickup unit thin by using the light emitting/receiving unit is disclosed in Japanese Unexamined Patent Publications Tokkai Nos. Hei 10-177733 and 8-36779 or JP-A 10-177733 and JP-A 08-036779.

In JP-A 10-177733, an included angle between a reflecting surface of reflecting means and a recording surface of an optical recording medium is smaller than 45 degrees. In JP-A 08-036779, a rising mirror has a rising angle smaller than 45 degrees.

However, such a light emitting/receiving unit is disadvantageous in that it is expensive. On the other hand, the optical pickup unit using general-purpose optical parts is advantageous in that it is not expensive in comparison with the optical pickup unit using the light emitting/receiving unit. This is because the general-purpose optical parts are not costly.

As described above, in the existing optical pickup unit having a structure in which the semiconductor laser LD and the photodetector PD are separately arranged with each other and adopting the polarized optical system as the optical system, the wave plate WP must be disposed between the rising mirror MIR and the objective lens OL, resulting in an increase in number of parts and thus making it difficult to lower the height measure H' of the optical pickup unit. Therefore, as a result, it is difficult to make the optical pickup unit thin, as mentioned in the preamble of the instant specification.

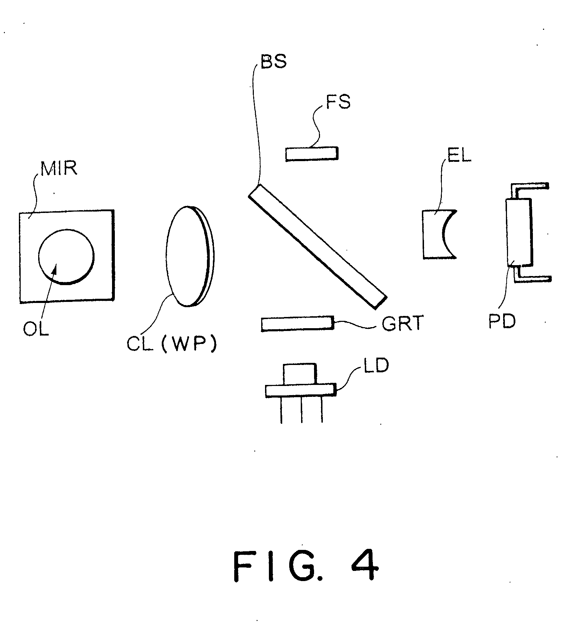

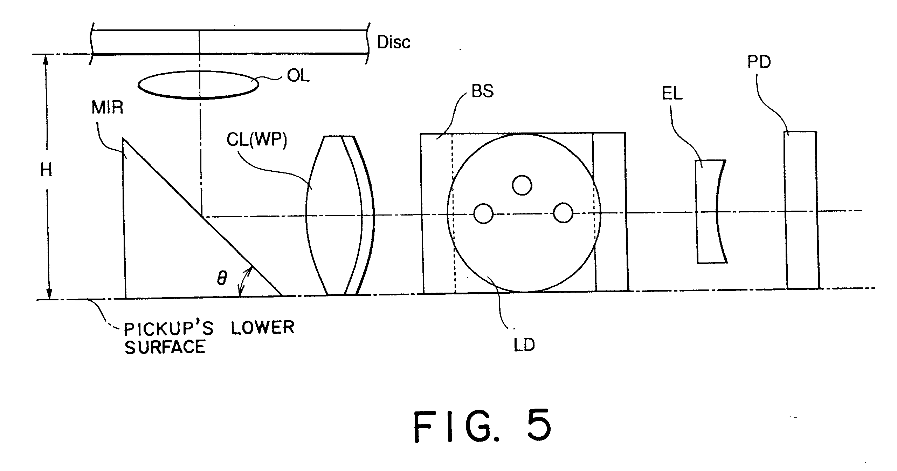

Referring to Figs. 4 and 5, description will proceed to an optical pickup unit according to a preferred embodiment of this invention. Fig. 4 is a plan view showing a polarized optical system of the optical pickup unit according to the preferred embodiment of this invention while Fig. 5 is a front view showing the polarized optical system of the optical pickup unit according to the preferred embodiment of this invention.

The illustrated optical pickup unit is similar in structure and operation to the existing thin optical pickup unit illustrated in Figs. 1 and 2 except that the wave plate WP is omitted from the optical pickup unit and a collimator lens CL(WP) with a wave plate is used in place of the collimator lens CL. Accordingly, components having similar functions of those illustrated in Figs. 1 and 2 are attached with the same reference symbols and description thereof will be omitted in order to simplify description and to avoid repeated description.

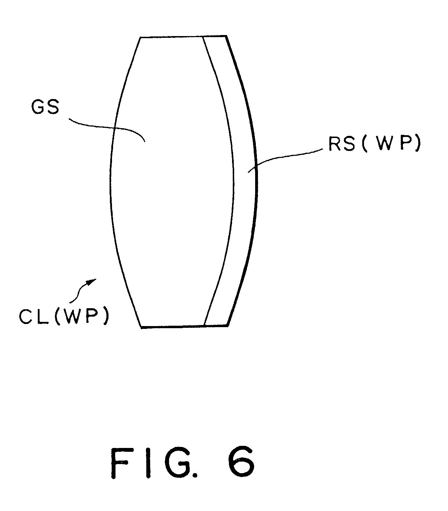

Fig. 6 schematically illustrates the collimator lens CL(WP) with the wave plate for use in the optical pickup unit illustrated in Figs. 4 and 5. The collimator lens CL(WP) with the wave plate comprises a glass (a polished lens) GS having one surface and a functional resin layer RS(WP) attached on the one surface of the glass (polished lens) GS. Specifically, attached on the one surface of the glass (polished lens) GS, the functional resin layer RS(WP) comprises a resin layer which forms an aspheric surface and which has double refraction and has a function as a half-wave plate or a quarter-wave plate.

It is noted that the resin layer RS, which is attached on the one surface of the glass (polished lens) GS used as the collimator lens CL shown in Fig. 3, has only the function as the aspheric surface and does not have the double refraction. In addition, the above-mentioned hybrid lens disclosed in JP-A 7-56006 comprises the resin layer which has the function as the spectral filter and which does not have the function as the wave plate.

In the manner which is described above, inasmuch as the collimator lens CL(WP) with the wave plate is used in lieu of the collimator lens CL, it is possible to omit the wave plate WP which is required for the existing optical pickup unit. Accordingly, it is possible to reduce the number of the parts to reduce costs and to make the optical pickup unit thin (or to miniaturize the optical pickup unit). That is, a height measure H of the optical pickup unit is smaller than the height measure H' of the existing optical pickup unit, namely,

$$H < H'.$$

Referring now to Figs. 4 and 5, description will be made as regards operation of the optical pickup unit illustrated in Figs. 4 and 5.

Disposed this side, the semiconductor laser LD radiates a laser beam in a horizontally forward direction. The radiated laser beam has a polarization direction which extends right and left within a drawing sheet of Fig. 4. The outgoing laser beam is separated into three laser beams by the diffraction grating GRT and is bent at a right angle by the beam splitter BS to go horizontally leftward. The laser beam, which goes horizontally leftward, has a polarization direction which extends up and down within the drawing sheet of Fig. 4. In addition, the beam splitter BS separates the incident laser beam into a reflected beam and a transmitted beam at a constant ratio. For example, the beam splitter BS reflects 80% of the incident laser beam as the reflected beam and transmits 20% of the incident laser beam as the transmitted beam. The forward sensor FS monitors a light amount of the transmitted beam from the beam splitter BS.

The laser beam, which goes horizontally leftward, is collimated into a collimated beam and has a polarization direction rotated by the collimator lens CL(WP) with the wave plate and thereafter is bent at a right angle by reflection at the reflecting surface of the rising mirror MIR to go vertically upward. The laser beam, which goes vertically upward, is converged (irradiated) on a signal recording surface of the optical disc Disc through the objective lens OL.

Reflected by the signal recording surface of the optical disc Disc, a reflected beam (return beam) goes vertically downward, passes through the objective lens OL, and is bent at a right angle by reflection at the reflecting surface of the rising mirror MIR to go horizontally rightward. The return beam, which goes horizontally rightward, is detected by the photodetector PD through the collimator lens CL(WP) with the wave plate, the beam splitter BS, and the concave lens EL.

While this invention has thus far been described in conjunction with a preferred embodiment thereof, it will now be readily possible for those skilled in the art to put this invention into various other manners. That is, although the above-mentioned embodiment describes only an example where the functional resin layer having the function as the wave plate is attached on the one surface of the collimator lens as a functional lens in the polarized optical system, the functional resin layer having the function as the wave plate may be attached on one surface of an objective lens as a functional lens in the polarized optical system.

Each feature disclosed in this specification (which term includes the claims) and/or shown in the drawings may be incorporated in the invention independently of other disclosed and/or illustrated features.

The text of the abstract filed herewith is repeated here as part of the specification.

An optical pickup unit for converging a laser beam produced by a semiconductor laser (LD) on a signal recording surface of an optical disc (Disc) through a polarized optical system, and for detecting a return beam from the signal recording surface by a photodetector (PD) through the polarized optical system. The polarized optical system includes a collimator lens (CL (WP)), which comprises a polished lens (GS) having two surfaces, a functional resin layer (RS(WP)) being attached on one of the surfaces of the polished lens. The functional resin layer functions as a wave plate. Such lens may comprise an objective lens.

## Claims

1. A functional lens (CL(WP)) comprising a polished lens (GS) having two surfaces, wherein a functional resin layer (RS(WP)) functioning as a wave plate extends on one of the two surfaces of said polished lens.

2. A functional lens (CL(WP)) as in claim 1, wherein the resin layer (RS(WP)) forms an aspheric surface and produces a double refraction of light.

3. A functional lens (CL(WP)) as in claim 2, wherein the lens functions as a half-wave plate or as a quarter-wave plate.

4. An optical pickup unit for converging a laser beam produced by a semiconductor laser (LD) on a signal recording surface of an optical disc (Disc) through a polarized optical system, and for detecting a return beam from said signal recording surface by a photodetector (PD) thorugh said polarized optical system, **characterized in that** said polarized optical system includes the functional lens (CL(WP)) of claim 1.

5. An optical pickup unit as claimed in claim 4, wherein said functional lens comprises a collimator lens (CL (WP)).

6. An optical pickup unit as claimed in claim 4, wherein said functional lens comprises an objective lens (OL).

7. An optical pickup unit as in any one of claims 4, 5 and 6, wherein the resin layer (RS(WP)) forms an aspheric surface and produces a double refraction of light.

8. An optical pickup unit as in claim 7, wherein the functional lens functions as a half-wave plate or a quarter-wave plate.

# FIG. I
## RELATED ART

FIG. 2
RELATED ART

# FIG. 3
## RELATED ART

FIG. 4

FIG. 5

EP 1 251 497 A2

FIG. 6